Europäisches Patentamt

(19) European Patent Office

Office européen des brevets

(11) Publication number: **0 169 507**
**A2**

(12) # EUROPEAN PATENT APPLICATION

(21) Application number: **85109018.3**

(22) Date of filing: **19.07.85**

(51) Int. Cl.⁴: **H 04 M 17/02**

(30) Priority: **27.07.84 IT 6775484**

(43) Date of publication of application:
**29.01.86 Bulletin 86/5**

(84) Designated Contracting States:
**BE CH DE FR GB LI**

(71) Applicant: **URMET S.p.A. Costruzioni
Elettro-Telefoniche
Via Bologna 188
I-10154 Torino(IT)**

(72) Inventor: **Mondardini, Massimo
Via Mazzini 40
I-10100 Torino(IT)**

(74) Representative: **Modiano, Guido et al,
MODIANO, JOSIF, PISANTY & STAUB Modiano &
Associati Via Meravigli, 16
I-20123 Milan(IT)**

(54) Telephone set for public use having a integral management microprocessor.

(57) The telephone set comprises a local logic unit having a microprocessor (30) operatively connected to:

– a dialing keyboard (22);

– a coin sorter (56) including an electronic selecting section;

–a coin receiving device (58-59) interposed between the sorter and a collecting channel (60) and activated directly by the microprocessor (30);

– sensor means (62,64,76,78) responsive to the presence of at least one coin or token in the collecting channel and being adapted to send corresponding signals to the microprocessor;

– a cash or return device (68) located at the outlet of the channel (60);

– a billing pulse detector (40);

– a on-hook simulator member (SG) activated by the microprocessor;

– at least one main power supply (34); and

– a reset member for the microprocessor, activated by the same at the end of the operations to ensure that the supply voltage drops below a set value.

./...

**Fig. 2**

"TELEPHONE SET FOR PUBLIC USE HAVING AN INTEGRAL
MANAGEMENT MICROPROCESSOR"

This invention relates to a telephone set for
public use which can be enabled by means of tokens
and different value coins and has a single slot to
receive said different value coins as well as
conventional telephone tokens, it being adapted to
cash or return them on a cash optimization basis, as
described in the          European Patent Application
N°84115605.2 of December 17, 1984 by the same Applicant.

Current telephone sets for public use are
provided with many     devices independent of one
another, each intended for performing a specific
function. Thus,    as an     example, the numbers are
dialed either on a dialing disk or storage-type
keyboard which are enabled by the hook contacts and
a dedicated device sensing the presence of coins
or tokens in the respective storage channels; the
coin collect or return function is effected by an
electromechanical member     activated     by     exchange
pulses     and     the hook contacts; the supply of
power to the set is ensured by the biasing exchange
voltage     and     a     local battery. The net result
is a complicated structure, hardly suited to meet
current requirements of automated management with
which also telephony tends to conform.

The     aim     of   this    invention is that of
simplifying the structure of the public telephone set,
changing it from an aggregate of discrete self-
contained devices into an "intelligent" terminal,
i.e. one provided with an own control logic unit
which     can process all the signals to and from the set in order to optimize and simplify its control.

Within the above general aim, this invention is directed to achieve the following important particular objects:

- allowing for connection of the set to the central exchange through the telephone loop alone, eliminating the need for an operating loop;

- indifferently allowing the set to be interfaced on the telephone line with the output of reverse polarity billing pulses, or on the line with the output of off-band frequency (12-16kHz) billing pulses;

- making the set suitable for receiving several coins or tokens with different face values through a single inlet slot;

- providing the set with self-diagnosis abilities, with automatic warning to the central exchange, for malfunctions or special situations, through automatic dialing of a telephone number programmed within the set itself;

- providing the set with the ability to perform communications on special services through dialing of free-of-charge numbers programmed within the set and acknowledged thereby;

- providing the set with the ability to recover the telephone line for a new call (with related new dialing) without the need to hang up;

- ensuring the set's operation with a small absorption of current from the line, e.g. an absorption not exceeding 15 mA; and

- allowing programming of basic parameters as charge of each time unit, free-of-charge numbers, the automatic call number for malfunctions, both directly inside the set and by intervention from the central exchange.

For the achievement of these important objects, as well as of others appearing from the detailed description that follows, this invention has for its subject a telephone set for public use, characterized in that it comprises a microprocessor-type local logic unit operatively linked to, and directly controlling the following peripheral units:

- a dailing keyboard connected directly to the microprocessor, which confirms the actuated keys and effects the selection of the dailled number on the telephone line;

- a coin sorter having an electronic sorting section which supplies the microprocessor with a coin-introduction acknowledge signal and a coin value signal;

- a coin receiving device interposed between the sorter and a storage channel and being activated directly by the microprocessor to either block each coin or admit it into said storage channel;

- sensor means responsive to the presence of at least one coin or token in the storage channel, to the coins moving through the collect channel, and to the residual capacity of the collecting box, said sensor means being connected to the microprocessor to output corresponding signals to the latter;

- a cash or return device located at the outlet end of the storage channel and controlled by the microprocessor to either cash or return each stored coin;

- a billing pulse detector;

- an on-hook simulator member, activated by the microprocessor for a set time period on opening the hook contacts, for re-connection to the line on hanging up and for receiving from said line the actuating power for the stored coin cash and return members;

- at least one main power supply for the microprocessor and the other means, members and devices as mentioned above, energized through one of the hook contacts;

- a microprocessor reset member, activated by the microprocessor at the end of the operations to ensure that the supply voltage drops below a set value.

A preferred embodiment of the invention will be now described, given herein by way of non-limitative example in conjunction with the accompanying drawings, where:

Figure 1 is a perspective view of a telephone set according to a preferred embodiment of the invention;

Figure 2 is a block diagram of the telephone set of Figure 1;

Figure 3 is a diagram of the circuits interfacing the microprocessor of Figure 2 with the telephone loop; and

Figures 4,5,6,7 and 8 are flow diagrams clarifying the operation of the inventive telephone set.

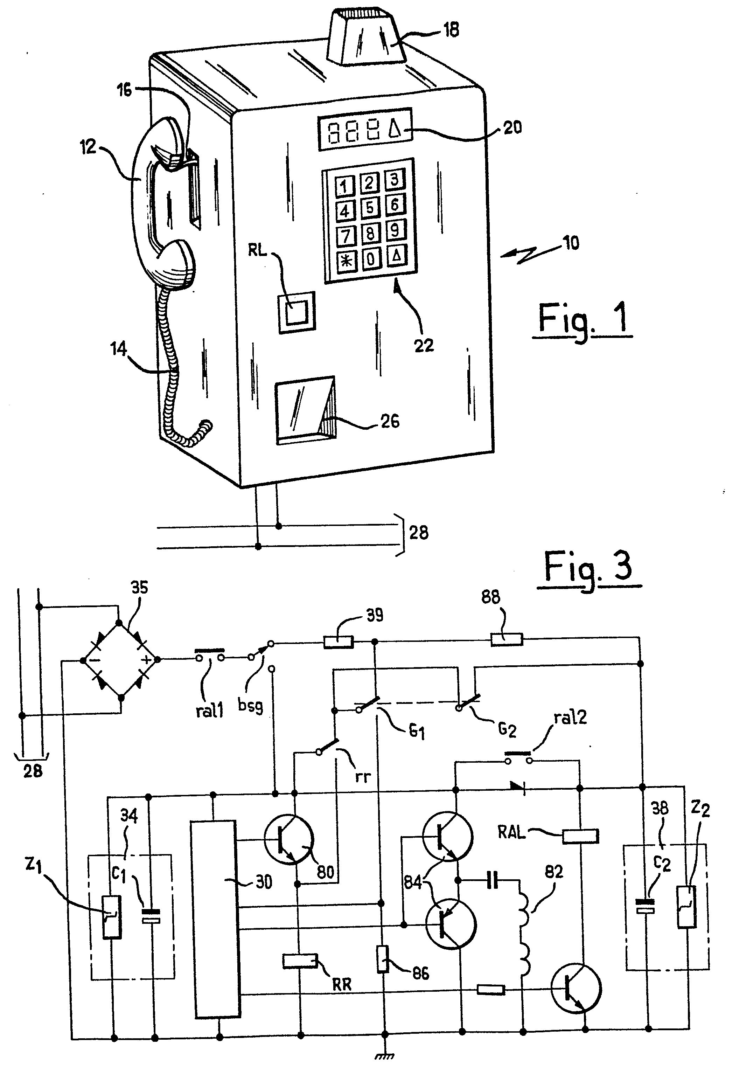

With reference to Figure 1, a telephone set according to this invention comprises: a case 10 housing electronic and electromechanical members to be described hereinafter; a handset 12 linked via a small flexible cable 14 with the set's internal circuits and normally hanging from a hook 16 operative to activate the internal members, as described hereinafter; a single coin or telephone token introduction slot 18; a liquid crystal alphanumeric display 20 and a numerical keyboard 22, both mounted on the case front; and a line recovery key RL located beside the keyboard or incorporated to it. Housed in the case 10 there also is a coin return box 26. The set is connected to a conventional telephone loop as schematically indicated at 28.

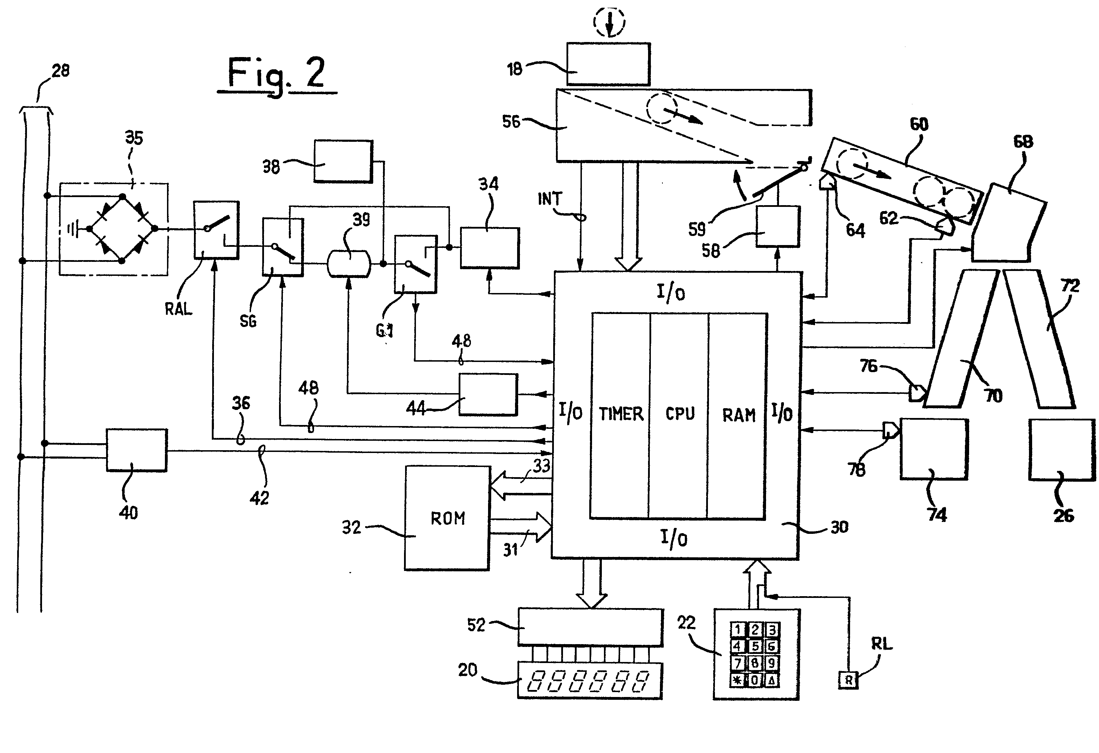

With reference now to Figure 2, the electronic and electromechanical members inside the case 10 will be described. These members are all controlled by a microprocessor 30, preferably of the CMOS , 8-bit word type, with a timer, and a RAM integrated with the CPU, such as the Model 6805 manufactured by Motorola. The timer supplies by "interrupt" all the time periods required for the set to operate, as explained hereinafter. The microprocessor 30 is provided with I/O lines addressable from the CPU. A preferably externally located ROM 32, containing the operative program, is connected to the microprocessor via a data bus 31 and an address bus 33.

The case 10 further houses a main power supply 34 which supplies the operating voltage to the microprocessor and the various members through appropriate conventional connections not shown for clarity, and is in turn powered from the loop 28 through a rectifying diode bridge 35, a line opening relay RAL, which is normally closed, a bistable switch SG for on-hook simulation, a conventional speech circuit 39, and a normally open hook contact G1, the state of which is sensed by microprocessor 30 through line 49. The RAL is driven by the microprocessor through a wire lead 36. In its working position, the on-hook simulator SG causes the hook contact G1 to be bypassed from the circuit for reasons which will be explained hereinafter. The bridge 35 has the purpose of supplying at all times the appropriate polarity to the power supply 34, even if the two wires of the loop are exchanged, thus rendering the set linking independent of any manipulations performed at the central exchange.

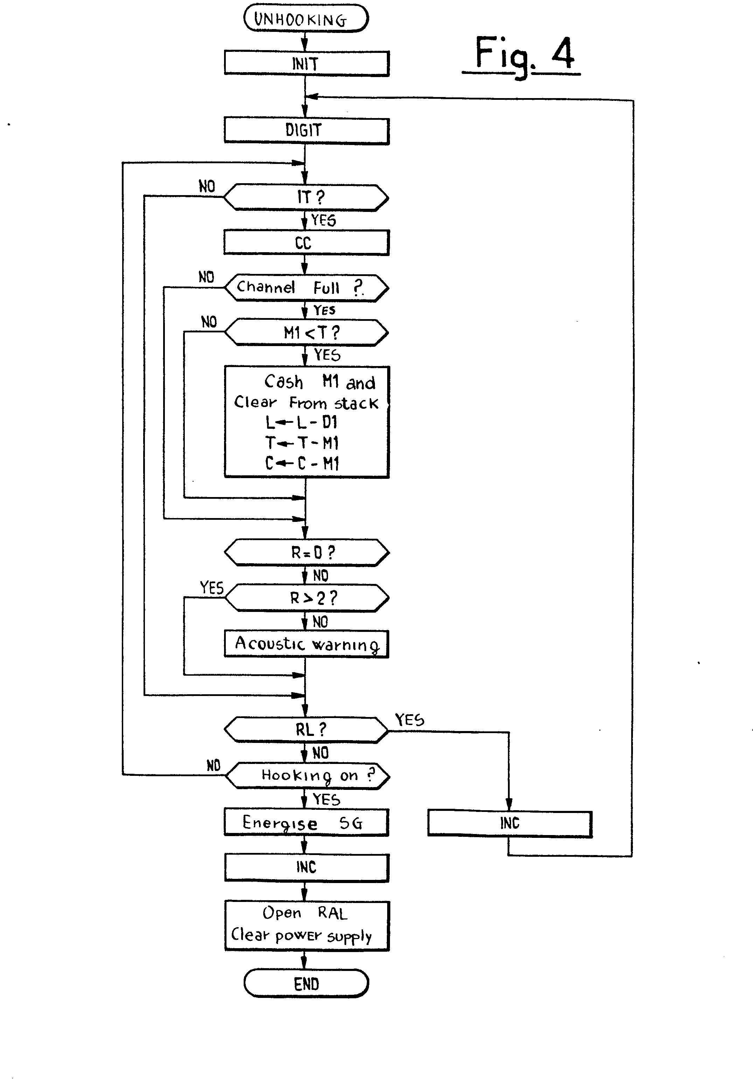

Upstream of the hook contact G1, there is also connected a second auxiliary power supply 38 which powers the display 20 through circuits not shown for clarity. The auxiliary power supply 38 is arranged to be coupled in parallel relationship to the main power supply 34, via a second hook contact G2 to be described hereinafter with reference to Figure 3, with the handset 12 removed from the hook, thereby contributing toward stepping up the power supplied to meet the high, short duration, power requirements of some electromechanical members.

Also linked to the speech circuit 39 is an acoustic signal generator 44 driven by the microprocessor 30.

A billing pulse detector 40, in the form of a reverse polarity sensor, as obvious for those skilled in the art, is connected directly to the loop 28 and supplies the microprocessor 30, through a wire lead 42, with a signal, when the loop changes its polarity. Where the billing pulses are passed to the central exchange, rather than by reversal of the polarity, by means of a 12 or 16kHz carrier, a separate known detector 40 would be provided, which is interchangeable without any further alterations of the circuits.

The microprocessor has an octal output connected to the input of a scaling integrated circuit 52, which parallely drives the display 20 in a manner known per se. Another input/output group of eight wires is connected to the keyboard 22 with a matrix link with a wire lead reserved for the line recovery key RL.

A coin sorting device 56, of a type known per se, is coordinated with the slot 18 to receive the coins and tokens introduced, acknowledging their validity and value. The sorter is connected to the interrupt line INT of the microprocessor 30, to actuate it on acknowledging a valid coin, and is also connected to a multiple I/O line of the microprocessor to provide a coded indication of the coin value.

Provided at the output of the sorter 56 is a coin accepting mechanism 58, comprising a solenoid driven by the microprocessor 30 and normally not supplied to allow the coin to drop into the return box 26 through a passageway not shown for clarity, it being adapted
to be energized to lift a door 59 and guide the coin
to a coin storage or collecting channel 60. The latter
is constructed such that coins being introduced arrange
themselves in a row therealong, while remaining tangential to each other. The channel 60 is provided with an
upper or head sensor 62 and a lower or end sensor 64,
adapted to detect the presence of a coin respectively
at the head or upper extremity and end or lower extremity of the channel 60. The sensors 62 and 64 are preferably cooperating pairs of LED's and phototransistors
whose light beam crosses the coin path in the channel.

The outlet of the channel 60 is normally closed by
a bidirectional cash unit 68 adapted to be controlled
by the microprocessor to open the outlet of the channel
60, to direct the leading coin to a cash channel 70
or a return channel 72, according to the command, for
discharging the coin respectively into a collecting
box 74 or the return box 26, as already mentioned with
reference to Figure 1.

The passage of the coin through the collecting
channel 70 is    detected by a cash check sensor 76
(e.g. of the same type as the sensors 62 and 64), close
to the channel bottom, for fraud-preventing purposes.
Another sensor 78, such as a strain  gage, senses the
weight of the collecting box 74 for determining whether
it is full.

In Figure 3, there is shown in further detail the
circuitry of a portion of the diagram of Figure 2,
concerning interfacing of the microprocessor 30 with the
telephone loop 28.

Each of the power supplies 34,38 comprises on its output a respective voltage stabilizing zener Z1, Z2 (or functionally equivalent cirouit) and a respective smoothing capacitor C1,C2, so as to be able on the one hand to supply the operating voltage to the microprocessor 30 over short periods even while removed from the loop, and on the other hand to supply momentary current peaks for actuating the electromechanical members without excessively loading the telephone line. With the handset unhooked, the hook contacts G1,G2 supply line voltage to the auxiliary power supply 38, while the connection is opened with the main power supply 34 inoperative. In that condition, the diode 50 uncouples from the auxiliary power supply that portion of the circuit (including inter alia the microprocessor 30) which is unrelated to the display 20. In parallel with diode 50 is a second normally open contact of the relay RAL, for the purpose of keeping the microprocessor fed during the periods (lasting about 1 second) when the RAL is opened to disconnect the set from the central exchange.

The auxiliary power supply 38 is also connected to the line through a resistor 88 designed to admit a very low current, e.g. up to 60 μA, adequate to keep the capacitor C2 charged to supply the reduced current required to operate the display. In a more sophisticated embodiment, the resistor 88 could comprise a dipole constructed according to conventional techniques to have an increasing resistance as the potential difference across it
decreases, thereby providing a stronger current when
the capacitor C2 is discharged, and reducing
the current down to neglibile values when the
capacitor C2 is charged and the auxiliary power supply
is no longer subjected to a high current absorption
from the load.

Furthermore, on lifting the handset, when the
two power supplies are paralleled through the hook
contacts G1,G2, capacitor C2 having a higher
capacitance than the capacitor C1, is discharged to
the latter to quickly bring the main power supply
voltage to a sufficient value to operate the microprocessor.

Serially connected between the hook contact G1
and the main power supply is also a   reset  RR
contact,  the    coil RRB   whereof   is controlled
by the microprocessor 30 through a transistor 80 to
close the smoothing capacitor C1 to the coil itself
(while disconnecting at the same time the power
supply 34 from the telephone line), for  quickly
discharging    the   voltage  of the latter capacitor
when no longer in use,  for reasons to be explained.

The switching of the hook on and off is detected
by the microprocessor as a change of voltage across
a resistor 86.

The actuator 82 of the bistable on-hook simulator
SG is controlled by the microprocessor through a pair
of complementary transistors 84, through a dedicated line.

The operations performed by the microprocessor 30 while the telephone set is in operation will be next described, said operations corresponding to instructions stored into the ROM 32.

When the telephone set is inoperative, i.e. with the handset hung up, the hook contact G1 is open and the main power supply 34 off. Therefore, the microprocessor 30 will be inactive, as will all of the members controlled by it, except for the display 20 and associated IC 52, which are powered by the auxiliary power supply 38 (which is permanently connected to the telephone loop), to display the date loaded by the microprocessor into the circuit 52 before going off at the end of the last previous operation.

On lifting the handset 12, the hook contact G1 will establish the connection of the main power supply 34 to the microprocessor 30 and other telephone members, while resetting the CPU to start the program stored in the ROM 32, the main flow diagram whereof is shown in Figure 4.

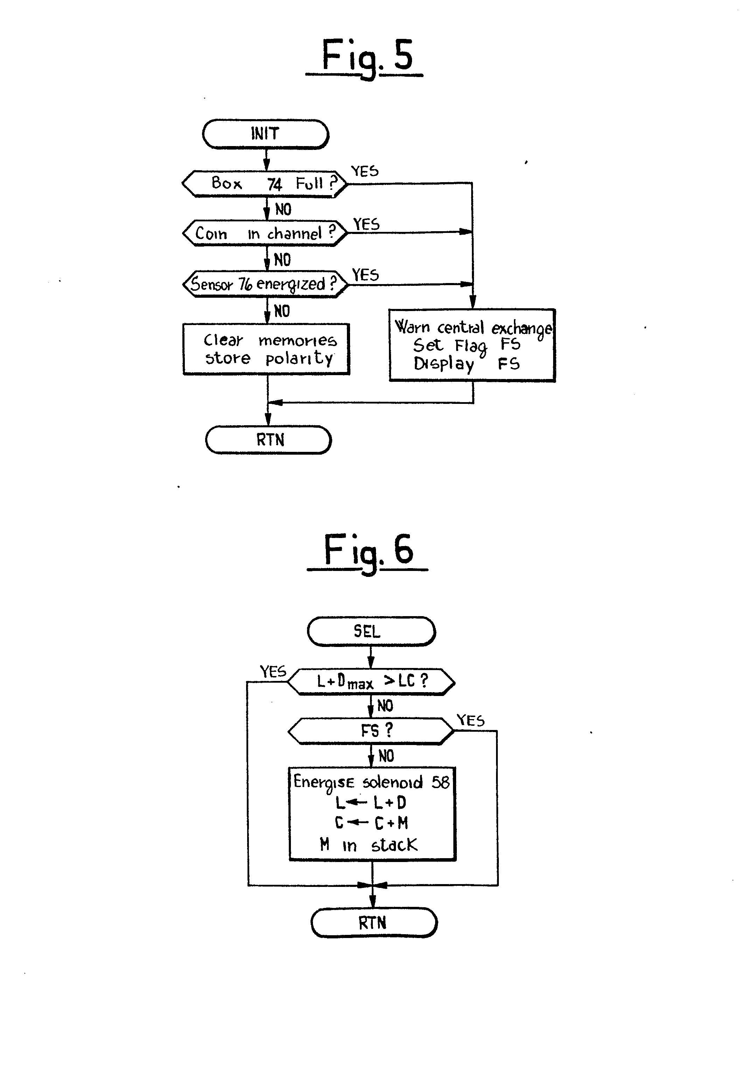

The microprocessor 30 will first carry out an initializing routine INIT, shown in the diagram of Figure 5. It comprises a diagnostic step, for checking that the collecting box is not full (via sensor 78), that there are no coins in the channel (via sensor 62), and that the cash checking sensor 76 is de-actuated. If one of these conditions is detected, the microprocessor 30 selects a predetermined central exchange number, sets an "Out-of-order" flag FS and indicates that state to the user on the display 20. The routine INIT comprises further an initialization step proper whereby the memories are cleared, the loop rest polarity is stored, and the ready condition is displayed on the display 20.

At any time during the telephone use (i.e. with the handset lifted), the microprocessor may receive an "interrupt" from the sorter 56 to receive coins and keep a count of the coins introduced. For improved versatility, the microprocessor, additionally to storing a map of the coins introduced, in the form of a FIFO stack, and the total C of the running credit, also calculates each time the physical length of the row of coins in the channel, summing the coin diameters for which the program contains the values according to any face values accepted by the set. Thus, the number of the coins that may be contained into the channel may vary according to the face value.

On receiving the "interrupt", the microprocessor will carry out a coin accepting routine SEL, shown in Figure 6. It compares the length LC of the channel to the actual length L of the row of coins (calculated as the sum of the diameters of the previously accepted coins), as increased by the value $D_{max}$ the largest receivable coin diameter. If the resulting length of the row of coins exceeds the space available in the channel, the microprocessor will return to "interrupt" and remain inactive, while the coin not guided to the channel will fall down and be returned to the box 26. Otherwise, the microprocessor would energize the accepting solenoid for a sufficient time to allow the passage of a single coin, check that the end sensor 64 of the channel is obscured and disabled just for the time required for a coin to move past, and then update its accounting, loading into the FIFO map the value of the accepted coin, increasing the credit total C by the same amount, and increasing the actual length L of the row of coins in the channel by the value D of the diameter of the accepted coin.

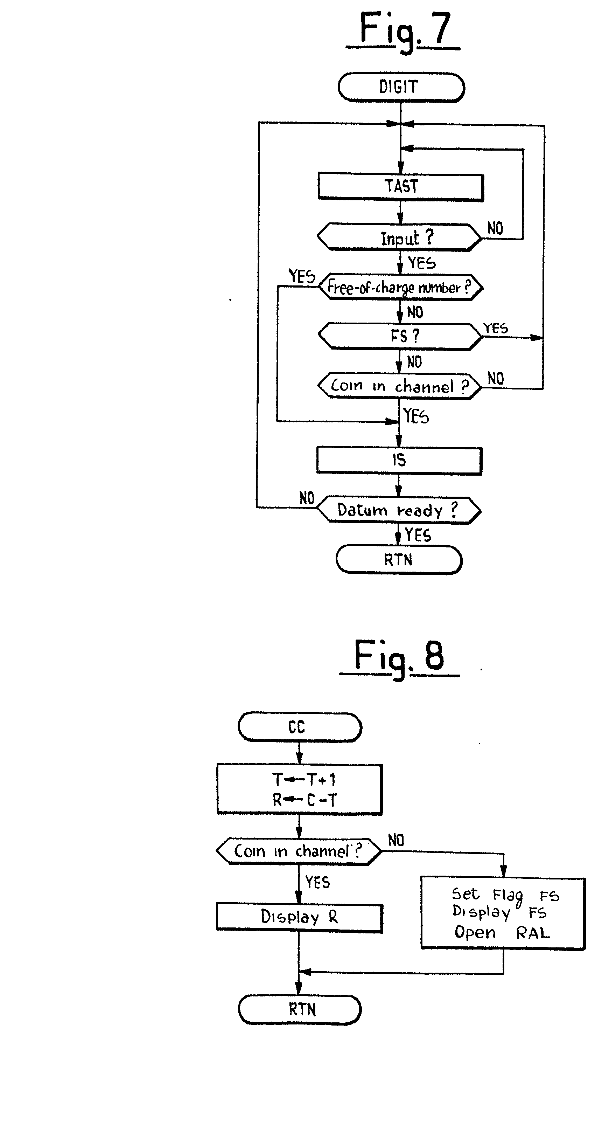

On completion of the routine INIT, the microprocessor will execute a routine DIGIT of acquisition and selection of the digits of the telephone number dialled by the user, the flow diagram wherefor is shown in Figure 7. This consists of a keyboard read routine TAST, which is anti-bouncing and anti-repetition in conformity with known techniques in the art which will be omitted from this description. The routine TAST is repeated until a key is sensed. For each digit acknowledged, a check is made on its belonging to at least one in a table of free-of-charge numbers, by activating a routine 1S to send to the line dialling pulses corresponding to the digit sensed. Such pulses are generated by opening and closing the relay RAL for predetermined time periods (shorter than the opening time required to disconnect the set from the central exchange). This routine will not be described in detail, it being obvious to those skilled in the art. If the number is not free-of-charge, and if the flag FS is set, the routine goes back to the block TAST, because no other operations are admitted in the "Out-of-order" state. Otherwise, the routine DIGIT lastly will check if at least one

coin is present in the channel, prior to giving its consent for the output of the dialling pulses. After dialling each digit, return is made to the routine DIGIT until a Datum Ready is sensed.

With reference now to the main diagram of Figure 4, the program now reads the billing pulse detector 40, and if a pulse has been received, it carries out the credit checking routine CC (Figure 8), increasing the billing total  T and calculating the new leftover credit R as the difference between the total available credit C (determined in a manner to be explained) and the billing total T. After checking that the coin has not been deceiptively withdrawn from the channel, the routine CC will display the actual running credit R. If no coin is present in the channel, the routine CC sets the "Out-of-order" flag, displays this state, and opens the relay RAL for approximately 1 second in order to disconnect the set from the central exchange.

Referring back to the diagram of Figure 4, the program checks now whether the channel is full, by comparing the actual length L of the row of coins to the rated or nominal length LC of the channel, and in that case, should the value M1 of the leading coin be smaller than the leftover credit, it will collect that coin, by driving the cash magnet 68, removing M1 from the FIFO stack in RAM, decreasing both T and C by the value M1, and decreasing the actual length L of the row of coins by the value D1 of the diameter of the collected coin. Thus, in this way the microprocessor will be able to accept the next coin introduced through the slot 18, to permit calls to arbitrary amounts independent of the maximum credit materially containable in the channel.

The program checks now whether the leftover credit R is nil, opening in that case the RAL; otherwise it checks whether the leftover credit is less than 2 billing units, activating in that case the leftover credit blinking on the display and momentarily energizing the acoustic signal generator 44 to warn the user. Otherwise, the program checks if the line recovery key RL has been pressed. In that case it will open the RAL for about 1 second (to disconnect the set from the central exchange) and revert to the routine DIGIT to receive another number for a new talk.

If the key RL has not been pressed, the program checks whether the handset has been hung up. In the negative case, it returns to the block IT; otherwise, since the use of the set has been terminated, the microprocessor energizes, if the call made was not addressed to a free-of-charge number, the on-hook simulator SG, reconnecting to the loop to carry out the cash routine INC.

The cash routine is optimized to collect the lowest credit value which is greater than or equal to the billing total. The cash criteria are described in the European Patent Application N° 84115605.2 of December 17, 1984 by this same Applicant

- 16 -

0169507

and reference is made to it for a better understanding of the invention, while omitting here a detailed description thereof.

After the cash routine the microprocessor 30 will open the RAL for the time required to disconnect the set from the central exchange (about 1 second), and then let the RAL fall back to the closed position, and will finally energize the reset relay RR which shorts out the capacitor C1 of the main power supply (Figure 3) to cause the supply voltage to quickly drop below the uncertainty threshold and to drive the microprocessor to rest, thus avoiding unforeseeable behaviors of the microprocessor.

It will be appreciated that the invention achieves its objects, avoiding in particular the need for a local battery, thanks to the use of a low absorption auxiliary power supply for operating the display only; avoiding the need for an operating loop, thanks to the elimination of interferences between the set and the central exchange, obtained by employing the on-hook simulator which allows the connection with the central exchange to be continued after the utilization has terminated.

A preferred embodiment of the invention has been described, but of course, it will be susceptible to many modifications and changes by the replacement with equivalent technical means within the purview of the inventive idea.

For example, the ROM 32 containing the program could be integrated to the microprocessor instead of being external, as could be integrated other functional blocks, such as the acoustic indicator 44 or the pulse detector 40. Also the display 20, together with its drive circuit 52, could be embodied differently, e.g. as an electrochromic display. Some of the parts described could be omitted: for instance, in some situations, the auxiliary power supply could be dispensed with, for example, in the instance where the display is in fact of the electrochromic type. Likewise, the acoustic generator 44 could be omitted, or one or more of the sensors 62,64,76,78 if one or more of them is not required for anti-fraud purposes, — such as where the sorter 56 or some other coin handling member is provided to perform that function.

Changes and modifications may also be made in the functions performed by the microprocessor, also in relation to the requirements of the telephone agency of the country to which the telephone is to be supplied. For example, if no free-of-charge numbers are provided, the dialling routine DIGIT, is corresponding simplified, or such numbers, instead of being pre-loaded into the ROM could be received each time from the central exchange and loaded into the RAM, in which case the initialization routine INIT should be suitably modified. Again, the "Out-of-order" condition could completely disable the set, instead of still allowing free-of -charge number dialling as envisaged in the preferred embodiment. All these and other variations are to be
regarded as encompassed by the inventive idea as
defined in the appended claims.

## CLAIMS

1. A telephone set for public use, characterized in that it comprises a microprocessor-type local logic unit operatively linked to, and directly controlling the following peripheral units;

a dialling keyboard (22) connected directly to the microprocessor (30), which enables the actuated keys and effects the selection of the dialled number on the telephone line;

a coin sorter (56) having an electronic sorting section which supplies the microprocessor (30) with a coin-introduction acknowledge signal and a coin value signal;

a coin receiving device (58-59) interposed between the sorter (56) and a storage channel (60) and being activated directly by the microprocessor to either block each coin or admit it into said storage channel (60);

sensor means (62,64,76,78) responsive to the presence of at least one coin or token in the storage channel (60), to the coins moving through the collect channel (70), and to the residual capacity of the collecting box (74), said sensor means being connected to the microprocessor (30) to output corresponding signal to the latter;

a cash or return device (68) located at the outlet end of the storage channel (60) and controlled by the microprocessor (30) to either cash or return each stored coin;

a billing pulse detector (40);

an on-hook simulator member (SG), activated by the microprocessor (30) for a set time period on opening the hook contacts, for re-connection to the line on hanging up and for receiving from said line the actuating power for the stored coin cash and return members;

at least one main power supply (34) for the microprocessor (30) and the other means, members and devices as mentioned above, energized through one of the hook contacts; and

a microprocessor (30) reset member (RR), activated by the microprocessor at the end of the operations to ensure that the supply voltage drops below a set value.

2. A telephone set according to Claim 1, characterized in that it comprises a display means (20) controlled by the microprocessor (30) to provide operative indications.

3. A telephone set according to Claim 1, wherein a rectifying bridge (35) is connected between a telephone loop (28) and the hook contacts (G1,G2) characterized in that said billing pulse detector (40) is connected directly to the loop (28) to signal the microprocessor (30) the loop changes of polarity.

4. A telephone set according to either Claim 1 or 2, characterized in that it comprises billing pulse detector means (40) adapted to signal the microprocessor (30) the presence on the line of predetermined frequencies out the talk band.

5. A telephone set according to any of Claims 1-4, characterized in that the display means (20) is powered by an auxiliary power supply (38) permanently connected to the telephone line, said auxiliary power supply being placed in parallel with the main power (34) supply as the latter is energized.

6. A telephone set according to Claim 5, characterized in that the parallel connection between said auxiliary power supply (38) and said main power supply (34) is accomplished, with the telephone set in operation, by galvanic connection means cut off by the hook contacts (G1,G2).

7. A telephone set according to Claim 5 or 6, characterized in that the auxiliary power supply (38) is connected to the line, with the set disconnected therefrom, through resistive means (88) limiting the absorbed current below a predetermined value.

8. A telephone set according to Claim 7, characterized in that said resistive means (88) is a variable resistance depole whose value increases as the potential difference across it decreases, i.e. having a decreasing resistance versus voltage function.

9. A telephone set according to one of Claims 1-8, characterized in that said on-hook simulator (SG) comprises a bistable switch which in the operating position bypasses the hook contact (G1).

10. A telephone set according to one of Claims 1-9, characterized in that it comprises alline opening relay (RAL) in series with the hook contact (G1), controlled by the microprocessor (30) for forming dialling and telephone line disconnect pulses.

11. A telephone set according to Cla m 10, characterized in that it further comprises a line recovery key (RL) for recovering the line without hanging up the handset, connected to the microprocessor (30) causing the latter to effect disconnection of the set from the line by opening said line opening relay (RAL).

12. A telephone set according to one of the preceding claims, characterized in that said sensor means (62,64, 76,78) comprises co-operating pairs of LED's and phototransistors.

13. A telephone set according to one of the preceding claims, characterized in that said coin introduction acknowledge signal output by the coin sorter (56) is an interrupt signal.

14. A telephone set according to one of the preceding claims, characterized in that said coin receiving device (58-59) comprises an oscillating door which controls a port provided in the coin guide channel, by closing said port to allow the coin into the storage channel (60) and opening it to prevent said passing and detour the coin to return.

15. A telephone set according to one of the preceding claims, characterized in that said reset member (RR) comprises a relay whose coil (RBR) is controlled by the microprocessor (30) to short out the smoothing capacitor (C1) of the main power supply, after the microprocessor (30) has brought the  on-hook simulator (SG) back to the rest position.

16. A telephone set according to one of the preceding claims, characterized in that the microprocessor (30) is adapted to display on said display means (20) the running credit and "but-of-order" condition.

17. A telephone set according to one of the preceding claims, characterized in that said microprocessor (30) comprises, in an integrated configuration, at least a CPU, a RAM, and a timer; it is provided with I/O lines addressable from the CPU, and is permanently connected to a ROM containing the operative program.

18. A telephone set according to Claim 17, characterized in that the microprocessor (30) holds in memory the total running credit and a map of the coins introduced in the form of a FIFO stack.

19. A telephone set according to Claim 17 or 18, characterized in that said ROM contains free-of-charge dialling numbers.

20. A telephone set according to one of Claims 17-19, characterized in that said ROM contains at least one telephone number for alarm recall.

21. A telephone set according to one of the preceding claims, characterized in that the microprocessor (30) is programmed to calculate, on each coin acceptation, the actual length of the row of coins present in the storage channel (60) by summing their diameters, the program containing the value of that diameter for each face value accepted by the set; and in that said actual length is compared to the length of the storage channel (60) for the purpose of providing a criterion of acceptation or rejection of other coins.

22. A telephone set according to one of the preceding claims, characterized in that said ROM is programmed to implement the operative program of the microprocessor (30) in conformity with the accompanying flow diagrams and substantially as herein described and illustrated.

Fig. 1

Fig. 3

0169507

Fig. 2

3/5

0169507

Fig. 4

UNHOOKING → INIT → DIGIT → IT? → CC → Channel Full? → M1 < T? → Cash M1 and Clear From stack, L ← L - D1, T ← T - M1, C ← C - M1 → R = 0? → R > 2? → Acoustic warning → RL? → Hooking on? → Energise SG → INC → Open RAL Clear power supply → END

INC

0169507

## Fig. 5

```
                    ┌──────────┐
                    │   INIT   │
                    └──────────┘
                         │
                         ▼
              ┌─────────────────────┐  YES
              │  Box  74  Full ?    ├──────────────┐
              └─────────────────────┘              │
                         │ NO                       │
                         ▼                          │
              ┌─────────────────────┐  YES          │
              │ Coin  in channel ?  ├───────────┐   │
              └─────────────────────┘           │   │
                         │ NO                     │   │
                         ▼                        ▼   ▼
              ┌─────────────────────┐  YES   ┌──────────────────┐
              │ Sensor 76 energized?├───────▶│ Warn central      │
              └─────────────────────┘         │    exchange      │
                         │ NO                  │  Set Flag  FS    │
                         ▼                     │  Display   FS    │
              ┌─────────────────────┐          └──────────────────┘
              │ Clear  memories     │                   │
              │ store  polarity     │                   │
              └─────────────────────┘                   │
                         │◀───────────────────────────────┘
                         ▼
                    ┌──────────┐
                    │   RTN    │
                    └──────────┘
```

## Fig. 6

```
                    ┌──────────┐
                    │   SEL    │
                    └──────────┘
                         │
          YES            ▼
       ┌──────────┌─────────────────────┐
       │          │  L + D_max  > LC ?   │
       │          └─────────────────────┘
       │                   │ NO
       │                   ▼                 YES
       │          ┌─────────────────────┐
       │          │       FS ?          ├──────┐
       │          └─────────────────────┘      │
       │                   │ NO                  │
       │                   ▼                     │
       │          ┌─────────────────────┐        │
       │          │ Energise solenoid 58│        │
       │          │    L ← L + D         │        │
       │          │    C ← C + M         │        │
       │          │   M in stack         │        │
       │          └─────────────────────┘        │
       │                   │                      │
       └───────────────────┼──────────────────────┘
                           ▼
                    ┌──────────┐
                    │   RTN    │
                    └──────────┘
```

# Fig. 7

0169507

# Fig. 8